**Europäisches Patentamt**

**European Patent Office**

**Office européen des brevets**

(19)

(11) **EP 1 393 885 A1**

(12) **EUROPEAN PATENT APPLICATION**

(43) Date of publication:
**03.03.2004 Bulletin 2004/10**

(51) Int Cl.7: **B29D 11/00**

(21) Application number: **03255330.7**

(22) Date of filing: **27.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.08.2002 KR 2002051875**

(71) Applicant: **SAMSUNG ELECTRONICS CO., LTD.**
**Suwon-Shi, Gyeonggi-Do 442-742 (KR)**

(72) Inventors:
- **Hwang, Jin Taek, 109/1106 Saejong Apt.**
  **Daejeon-Shi 305-728 (KR)**

- Cho, Han Sol
  **Daejeon-Shi 305-728 (KR)**
- Choi, Jin Sung
  **Daejeon-Shi 305-728 (KR)**
- Park, Yong Young
  **Daejon-Shi 305-728 (KR)**
- Lee, Seung Hui
  **Gumi-Shi Gyeongsangbuk-Do 730-772 (KR)**

(74) Representative: **Kyle, Diana**
**Elkington and Fife**
**Prospect House**
**8 Pembroke Road**
**Sevenoaks, Kent TN13 1XR (GB)**

(54) **Method for fabricating preform for plastic optical fiber**

(57) Disclosed herein is a method for fabricating a preform for a plastic optical fiber. More specifically, the method comprises filling a reactor with a reactant including a thermal polymerization initiator and a photopolymerization initiator, and simultaneously or alternatively proceeding a thermal polymerization and a photopolymerization with the reactor rotated, thereby exhibiting improved process properties and physical properties of the preform, compared to when using only one of the initiators.

EP 1 393 885 A1

Printed by Jouve, 75001 PARIS (FR)

## Description

The present invention relates to a method for fabricating a preform for a plastic optical fiber, and more particularly to a method for fabricating a preform for a plastic optical fiber by simultaneously or alternatively proceeding a thermal polymerization and a photopolymerization using a thermal polymerization initiator in combination with a photopolymerization initiator, thereby exhibiting excellent process properties and physical properties of the preform.

Optical fibers used in the field of telecommunications are generally classified into single-mode fibers and multi-mode fibers in terms of the transmission mode of optical signal. Optical fibers currently used for long distance and high speed communications are mostly the step-index single-mode optical fibers based on quartz glass. These optical fibers have a diameter as small as 5 microns to 10 microns, and as a result, these glass optical fibers face serious challenges in terms of achieving proper alignment and connection. Accordingly, these glass optical fibers are associated with expensive costs relating to achieving proper alignment and connection.

Alternatively, multi-mode glass optical fibers having a diameter that is larger than the diameter of single-mode optical fibers may be used for short distance communications such as in local area networks (LANs). However, these multi-mode glass optical fibers, in addition to being fragile, also suffer from expensive costs relating to achieving proper alignment and connection and therefore are not widely used. Accordingly, these multi-mode glass optical fibers have been mainly used for short distance communication applications up to 200 meters such as in LANs using a metal cable, for example, a twisted pair or coaxial cable. However, since the data transmission capacity or bandwidth of the metal cable is as low as about 150 Mbps and can not reach transmission speed of 625 Mbps, which is a standard for the year 2000 in accordance with asynchronous transfer mode (ATM), it cannot satisfy the future standard of transmission capacity.

To cope with these problems, the industry has expended great effort and investment over the past 10 years towards development of plastic optical fibers, which can be used in short distance communication applications, such as LANs. Since the diameter of plastic optical fibers can be as large as 0.5 to 1.0 mm which is 100 or more times than that of glass optical fibers, due to its flexibility, its alignment and connection are much easier issues than with plastic optical fibers. Moreover, since polymer-based connectors may be produced by compression molding, these connectors can be used both for alignment and for connection and thereby reduce costs.

On the other hand, the plastic optical fiber may have a step-index (SI) structure, in which a refractive index changes stepwise in a radial direction, or a graded-index (GI) structure, in which a refractive index changes gradually in a radial direction. However, since plastic optical fibers having a SI structure have high modal dispersion, the transmission capacity (or bandwidth) of a signal cannot be larger than that of cable. On the other hand, since plastic optical fibers having a GI structure have a low modal dispersion, it Can have a large transmission capacity. Therefore, it is known that GI plastic optical fiber is adequate for use as a communication medium for short distance, high-speed communications because of reduced costs derived from its larger diameter and large capacity of data transmission derived from low modal dispersion.

The conventional method for fabricating GI plastic optical fiber was first reported by a Japanese professor, Koike Y. et al. of Keio University in 1988[refer to *"Koike, Y. et al., Applied Optics, Vol. 27, 486 (1988)"*]. Since then, other related-techniques have been disclosed in U.S. Pat. No.5,253,323 (Nippon Petrochemicals Co.); U.S. Pat. No.5,382,448 (Nippon Petrochemicals Co.); U.S. Pat. No.5,593,621 (Yasuhiro Koike and Ryo Nihei); WO92/03750 (Nippon Petrochemicals Co.); WO92/03751 (Nippon Petrochemicals Co.); Japanese Patent Laid-Open Publication No.3-78706 (Mitsubishi Rayon Co., Ltd.); and Japanese Patent Laid-Open Publication No.4-86603(Toray Ind.). The methods disclosed in these prior patents are mainly classified into two methods as follows.

The first method is a batch process wherein a preliminary cylindrical molding product, namely, a preform in which a refractive index changes in a radial direction, is fabricated, and then the resultant perform is heated and drawn to fabricate GI plastic optical fiber.

The second method is a continuous process wherein a plastic fiber is produced by extrusion process, and then the low molecular material is extracted from the fiber, or contrarily introduced to the fiber to obtain GI plastic optical fiber.

It is known that the first by professor Koike succeeded in fabricating a GI plastic optical fiber having data transmission capacity of 2.5 Gbps, and that the second method could also successfully fabricate a plastic optical fiber having a relatively large data transmission capacity.

Van Duijnhoven and Bastiaansen reported another method for fabricating GI preform using high speed of rotation as high as about 20,000 rpm in WO 97/29903(U.S. Pat. No.6,166,107). Unlike the prior arts as mentioned above, this method uses the principle of centrifugal separation. When a mixture of monomers having different densities and refractive indices or a monomer dissolving a polymer is polymerized under very strong centrifugal field, concentration gradient is generated on account of a density gradient, and thereby, a refractive index gradient is generated. However, the above method has a limitation in selecting monomers because a monomer in high density should have a higher refractive index that a monomer in low density. Besides, none of the aforementioned methods mention anything related to the problem inevitably caused by volume shrinkage during (radical) chain polymerization common in the fabrication of GI preform. When volume shrinkage occurs in polymerization of monomer, a preform for a plastic optical fiber fabricated under the rotation of a reactor has a cavity in its center to form a shape of a tube. Thus, it is required to fill the cavity with additional monomer, prepolymer or polymer-dissolving monomers in order to fabricate a cavity-free preform. Accordingly, it is difficult to say that there is an improvement in productivity. Also, there is a possibility of occurring discontinuity of the refractive index profile in the case of cavity-filling type perform. This can lead to a significant or remarkable scattering in the interface, and therefore data transmission capacity is reduced. So, there is restriction in commercializing this type of optical fiber.

In order to solve the problem of volume shrinkage as mentioned above, the present inventor invented a method for fabricating a preform for a plastic optical fiber using a cavity-preventing reactor, and disclosed it in Korean Patent Appln. No. 2001-78965 and U.S. Appln. Serial No. 10/197,215. According to this method, a preform for a plastic optical fiber is fabricated by feeding a mixture of monomers having different refractive indices into the cavity-preventing reactor and polymerizing it with the reactor rotated. Concretely, the cavity-preventing reactor comprises: an introduction part having a reactant inlet through which a reactant is fed into the whole reactor; a reaction part which is adjacent to the introduction part through a blocking wall and has a flow path, through which the reaction part is connected with the introduction part, at the center of the blocking wall; and one or more cavity-preventing structures which exist between the flow path of the reaction part and the reactant inlet of the introduction part, and has one or more flow paths though which the reactant flows from the introduction part to the reaction part, for preventing a cavity developed from the reactant inlet of the introduction part from extending to the reaction part during rotation of the reactor.

In the method, the reactant is thermally polymerized or photopolymerized. The thermal polymerization is a process widely used for the preparation of optical polymers. However, in the case of thermal polymerization, the introduction part of the cavity-preventing reactor may be polymerized due to heat transfer from the reaction part, and so the flow of the reactant can be disturbed. In addition, when only thermal polymerization is applied, reaction time is extended, and so efficiency of the process is lowered.

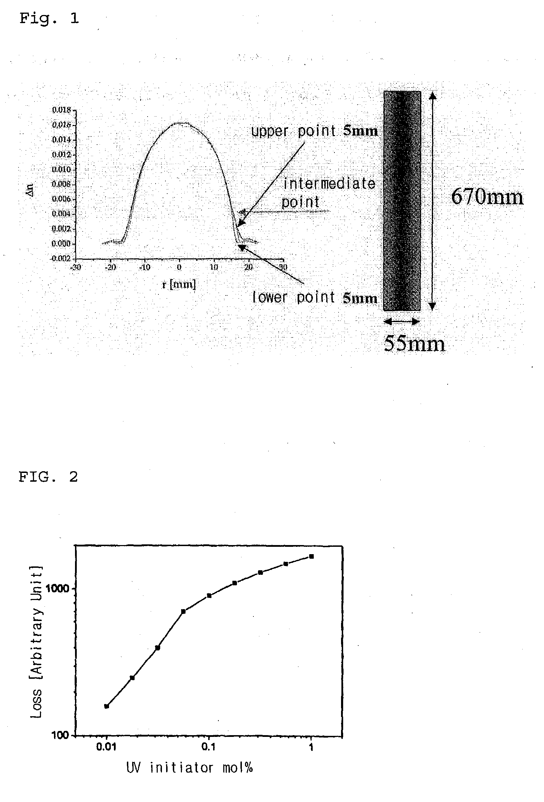

On the other hand, when the photopolymerization is proceeded in the cavity-preventing reactor, the polymerization time is short and the flow passages from the introduction part to the reaction part are not occluded. Accordingly, a preform having a uniform refractive index along the longitudinal direction can be fabricated as shown in Fig. 1. However, this photopolymerization causes a problem of high optical loss, compared to the thermal polymerization. In addition, the greater the amount of a photopolymerization initiator used, the higher the optical loss (Fig. 2). Furthermore, since the polymerization is mainly proceeded at the peripheral surface close to a UV light source, cracks are likely to appear, in particular, in a large diameter preform, and mechanical properties of a final optical fiber are deteriorated. Accordingly, the photopolymerization is limited in its application to the preparation of a plastic optical fiber.

The present inventor has found that when simultaneously or alternatively proceeding a thermal polymerization and a photopolymerization using a thermal polymerization initiator in combination with a photopolymerization initiator, problems of thermal polymerization and photopolymerization is offset and further the physical properties of the optical fiber can be improved, and accomplished the present invention.

In accordance with the feature of the present invention, there is provided a method for fabricating a preform for a plastic optical fiber, the method comprising steps of filling a reactor with a reactant including a thermal polymerization initiator and a photopolymerization initiator, and simultaneously or alternatively proceeding a thermal polymerization and a photopolymerization with the reactor rotated.

The above and other objects, features and other advantages of the present invention will be more clearly understood from the following detailed description taken in conjunction with the accompanying drawings, in which:

Fig. 1 is a graph showing a uniform refractive index profile along the longitudinal direction of a preform when a photopolymerization initiator is used;
Fig. 2 is a graph showing an optical loss according to an amount of a photopolymerization initiator used;
Fig. 3 is a perspective view showing an example of a cavity-preventing reactor usable in the present invention; and
Figs. 4A to 4C are perspective views showing another reactors usable in the present invention.

Hereinafter, the present invention will be explained in more detail in the following Examples with reference to the accompanying drawings.

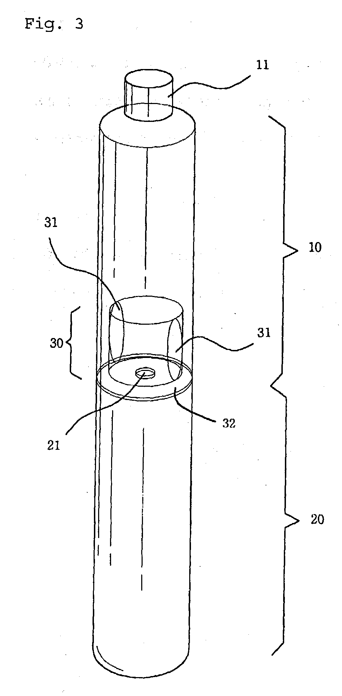

As a reactor usable in the present invention, any of currently used reactors are available. For example, a cavity-preventing reactor disclosed in Korean Patent Appln. No. 2001-78965 and U.S. Pat. Appln. Serial No. 10/197,215, which was filed by the present inventor, can be used. The cavity-preventing reactor is shown in Fig. 3 and comprises: an introduction part 10 having a reactant inlet 11 through which a reactant is introduced into the whole reactor; a reaction part 20 which is adjacent to the introduction part 10 through a blocking wall

32 and has a flow path 21, through which the reaction part 20 is connected with the introduction part 10, at the center of the blocking wall 32; and one or more cavity-preventing structures 30 which exist between the flow path 21 of the reaction part 20 and the reactant inlet 11 of the introduction part 10, and has one or more flow paths 31 though which the reactant flows from the introduction part 10 to the reaction part 20, for preventing a cavity developed from the reactant inlet 11 of the introduction part 10 from extending to the reaction part 20 during rotation of the reactor.

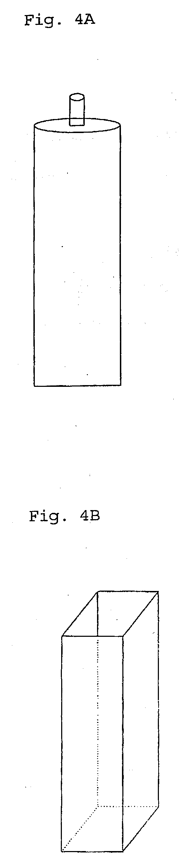

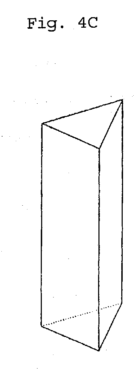

In addition to the reactor as described above, reactors with a circular, a triangular and a quadrangular section, respectively, can be used as depicted in Figs. 4A to 4C.

As a reactant, a pair of monomers having different indices can be used in the present invention. Alternatively, the reactant can be prepared in accordance with one of the following manners.

i) After a monomer having low refractive index is thermally polymerized and/or photopolymerized to form a prepolymer, the prepolymer is mixed with a monomer having high refractive index.
ii) After two monomers are respectively polymerized to form respective prepolymers, the prepolymers are mixed with each other.
iii) After a monomer having low refractive index is thermally polymerized and/or photopolymerized to form a polymer, the polymer is ground and dissolved in a monomer having high refractive index.

In particular, the mixture of a monomer and a prepolymer is preferred because a density of the monomer having low refractive index can be regulated through prepolymerization and it is possible to select monomers irrespective of their density. In addition, grinding and dissolution processes of a polymer, which occur in the case of dissolving a polymer in a monomer, are avoided.

The term 'prepolymer' used herein means a state before a monomer is completely polymerized and solidified. The prepolymer has higher viscosity and density than the monomer prior to polymerizing. The present invention is characterized in that the prepolymer has higher density than the other monomer solution having a relatively high refractive index. The degree of polymerization of the prepolymer is determined by polymerization time and viscosity. The prepolymer used in the present invention has preferably a viscosity of about 50~500,000 cps (25°C), and more preferably 500~10,000 cps (25°C).

In addition to the monomer, the reactant further includes a thermal polymerization initiator and a photopolymerization initiator for polymerizing the monomer through heating and irradiating, and a chain transfer agent. Unlike the prior arts, the present invention is characterized in that the photopolymerization initiator and the thermal polymerization initiator are used in combination to simultaneously or alternatively proceed photopolymerization and thermal polymerization.

Specific examples of the monomer used in the present invention include, but are not limited to, methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfuryl methacrylate, 1-phenylcyclohexylmethacrylate, pentachlorophenylmethacrylate, pentabromophenylmethacrylate, styrene, TFEMA (2,2,2-trifluoroethylmethacrylate), TFPMA (2,2,3,3-tetrafluoropropylmethacrylate), PFPMA (2,2,3,3,3-pentafluoropropylmethacrylate), HFIPMA (1,1,1,3,3,3-hexafluoroisopropylmethacrylate), HFBM (2,2,3,4,4,4-hexafluorobutylmethacrylate), HFBMA (2,2,3,3,4,4,4-heptafluorobutylmethacrylate) and PFOM (1H,1H-perfluoro-n-octylmethacrylate).

Examples of the thermal polymerization initiator used in the present invention include, but are not limited to, 2,2'-azobis(isobutyronitrile), 1,1'-azobis(cyclohexanecarbonitrile), 2,2'-azobis(2,4-dimethylvaleronitrile), 2,2'-azobis(methylbutyronitrile), di-tert-butyl peroxide, lauroyl peroxide, benzoyl peroxide, tert-butyl peroxide, azo-tert-butane, azo-bis-isopropyl, azo-normal-butane, di-tert-butyl peroxide, etc.

Examples of the photopolymerization initiator used in the present invention include, but are not limited to 4-(paratolylthio)benzophenone, 4,4'-bis(dimethylamino)benzophenone, 2-methyl-4'-(methylthio)-2-morpholino-propiophenone, 1-hydroxy-cyclohexyl-phenylketone, 2-hydroxy-2-methyl-1-phenyl-propan-1-one, benzophenone, 1-[4-(2-hydroxyethoxy)-phenyl]-2-hydroxy-2-methyl-1-propan-1-one, 2-benzyl-2-methylamino-1-(4-morpholinophenyl)-butanone-1, 2,2-dimethoxy-1,2-diphenylmethan-1-one, bis(2,4,6-trimethylbenzoyl)-phenylphospinoxide, 2-methyl-1[4-(methylthio)phenyl]-2-morpholinopropan-1-one, bis(.etha.5-2,4-cyclopentadien-1-yl)-bis(2,6-difluoro-3-(1H-pyrro-1-yl)-phenyl) titanium, etc.

Examples of the chain transfer agent used in the present invention include, but are not limited to, normal-butyl-mercaptan, lauryl mercaptan, octyl mercaptan, dodecyl mercaptan, 1-butanethiol, etc.

The amount of the photopolymerization initiator used is determined depending on the initiation rate of the initiator, polymerization rate of the monomer, intensity of and distance from UV light source, glass wall thickness of the reactor, diameter of the reactor, reaction temperature, etc. About 5% by weight or less of the photopolymerization initiator is preferred, and 0.5% by weight or less is more preferred. Since the photopolymerization initiator increases the optical loss of an optical fiber, it is preferred to add in a small amount.

When the thermal polymerization initiator is used together with the photopolymerization initiator, the weight ratio of the thermal polymerization initiator to the photopolymerization initiator is preferably within the range of 0.99: 0.01 to 0.01: 0.99, and more preferably 0.9: 0.1 to 0.1: 0.9. However, a ratio exceeding these ranges is possible considering the reaction conditions for fabricating a preform and types of a preform.

In the method of the present invention, it is preferred to pressurize the interior of the reactor using an inert gas such as argon to prevent the formation of a cavity, and to proceed polymerization in the reactor stably. When the interior of the reactor is pressurized, the boiling point of the monomer is raised and thus polymerization can be proceeded even at high temperature. Accordingly, the polymerization can be completed in a shortened time without formation of bubbles due to unreactants. When the reactor is made of a fragile material, e.g., glass, quartz, ceramic or plastic, it is difficult to raise the internal pressure of the reactor to 4 bars or more. In this case, the exterior of the reactor is pressurized under the same pressure as applied to the interior of the reactor to avoid the breakage of the reactor.

To induce better refractive index distribution in the preform of the present invention, the rotational speed of the reactor can be varied. The variations can be not only a repeated rotation and stopping, but also a velocity function having varying amplitudes and cycles such as a trigonometric function.

In order to allow smooth heat transfer for the polymerization process in the fabrication of the preform for a plastic optical fiber, the preform preferably has a radius of 1~10cm. The length of the preform is preferably set to about 100cm or shorter suitable for a common thermal drawing.

The preform for a plastic optical fiber fabricated in accordance with the method of the present invention is thermally drawn into a refractive index distributed type plastic optical fiber having a desired diameter. Furthermore, the method of the present invention is applicable to producing refractive index distributed type lenses and imaging guides for delivering images.

Hereinafter, the present invention will be described in more detail with reference to the following Examples. However, these Examples are given for the purpose of illustration and are not to be construed as limiting the scope of the invention.

In these Examples, a cavity-preventing reactor, which was similar to that of Fig. 3 was used. The main reaction part of the reactor has a diameter of 50mm and a height of 400mm, and an introduction part has a diameter of 70mm and a height of 200mm. As a pair of monomers having different refractive indices, benzyl methacrylate (hereinafter, referred to as 'BMA') and methyl methacrylate (hereinafter, referred to as 'MMA') were used. The density and the refractive index of the BMA are 1.040 and 1.512, respectively, while those of the MMA are 0.936 and 1.414, respectively.

When a prepolymer is prepared, a jacket reactor equipped with a circulator was used in a thermal polymerization initiator, while a transparent reactor equipped with a UV lamp was used in a photopolymerization initiator.

As the thermal polymerization initiator and the photo polymerization initiator, 2,2'-azobisisobutyronitrile (hereinafter, referred to as 'AIBN') and 2-hydroxy-2-methyl-1-phenyl-propan-1-one (hereinafter, referred to as 'HMPP') were used, respectively. 1-butanethiol (hereinafter, referred to as '1-BuSH') was used as a chain transfer agent.

In the present invention, the optical loss of a plastic optical fiber was determined by drawing a 0.75mm thick optical fiber, cutting the drawn optical fiber at an interval of 1m, and measuring light intensity outputted from the ends of the cut optical fibers using a 650nm laser diode.

The yield of the preform was determined by dividing 'the length of the optical fiber drawn from the preform without formation of any bubbles and defects' by 'the maximum length of the optical fiber drawn from the preform', and specifically was calculated by the following equation (1):

$$\text{Yield of preform (\%)} = 100\ \frac{l_f}{l_p}\ (\frac{d_f}{d_p})^2 \qquad (1)$$

wherein $l_p$ is a length of the preform, $l_f$ is a length of the optical fiber drawn from the preform, $d_p$ is a diameter of the preform, and $d_f$ is a diameter of the drawn optical fiber.

The yield of preform was calculated by averaging measured values from 5 preforms fabricated in the same manner.

**Example 1:**

AIBN and 1-BuSH were added to 510g of MMA in the concentration of 0.066% and 0.2% by weight, respectively. The mixture thus prepared was charged into a jacket reactor, and polymerized at the temperature of 75°C for 1 hour with rapid stirring to obtain a prepolymer. The prepolymer thus obtained was charged into a main reaction part of a cavity-preventing reactor, and then polymerized at the temperature of 75°C for 12 hours with the reactor rotated at the speed of 3,000rpm to form a clad. Next, AIBN, HMPP and 1-BuSH were added to 338g of MMA in the concentration of 0.066%, 0.022% and 0.3% by weight, respectively. The mixture thus prepared was charged into a jacket reactor, and polymerized at the temperature of 75°C for 40 minutes to prepare a prepolymer. To the prepolymer, 120g of BMA was added and then stirred for 2 minutes. The resulting mixture was charged into the cavity-preventing reactor, in which the clad had previously formed, to fill the reactor, and polymerized at the temperature of 75°C for 12 hours with the reactor rotated at a speed of 3,000rpm and irradiated with UV light to fabricate a preform for a plastic optical fiber in a yield of 93%. The optical loss of 0.75mm thick plastic optical fiber drawn from the preform was measured to be 195dB/km.

## Example 2:

AIBN and 1-BuSH were added to 510g of MMA in the concentration of 0.066% and 0.2% by weight, respectively. The mixture thus prepared was charged into a main reaction part of a cavity-preventing reactor, and polymerized at the temperature of 75°C for 24 hours with the reactor rotated at the speed of 3,000rpm to form a clad. Next, AIBN and 1-BuSH were added to 338g of MMA in the concentration of 0.066% and 0.2% by weight, respectively. The mixture thus prepared was charged into a jacket reactor, and heated to 75°C for 40 minutes to prepare a prepolymer. To the prepolymer, 120g of BMA containing 0.022% by weight of HMPP and 0.2% by weight of 1-BuSH was added and then stirred for 2 minutes. The resulting mixture was charged into the cavity-preventing reactor, in which the clad had previously formed, to fill the reactor, and polymerized at the temperature of 75°C for 12 hours with the reactor rotated at the speed of 3,000rpm and irradiated with UV light to fabricate a preform for a plastic optical fiber in a yield of 95%. The optical loss of 0.75mm thick plastic optical fiber drawn from the preform was measured to be 190dB/km.

## Comparative Example 1:

HMPP and 1-BuSH were added to 510g of MMA in the concentration of 0.066 and 0.2% by weight, respectively. The mixture thus prepared was charged into a main reaction part of a cavity-preventing reactor, and polymerized at the temperature of 60°C for 12 hours with the reactor rotated at the speed of 3,000rpm and irradiated with UV light to form a clad. Next, HMPP and 1-BUSH were added to 338g of MMA in the concentration of 0.066% and 0.2% by weight, respectively. The mixture thus prepared was polymerized at the temperature of 60°C for 40 minutes with the reactor irradiated with UV light, to prepare a prepolymer. To the prepolymer, 120g of BMA containing 0.066% by weight of HMPP and 0.2% by weight of 1-BuSH was added and then stirred for 2 minutes. The resulting mixture was charged into the cavity-preventing reactor, in which the clad had previously formed, to fill the reactor, and polymerized at the temperature of 60°C for 12 hours with the reactor rotated at the speed of 3,000rpm and irradiated with UV light to fabricate a preform for a plastic optical fiber in a yield of 98%. The optical loss of 0.75mm thick plastic optical fiber drawn from the preform was measured to be 310dB/km.

## Comparative Example 2:

AIBN and 1-BuSH were added to 510g of MMA in the concentration of 0.066% and 0.2% by weight, respectively. The mixture thus prepared was charged into a main reaction part of a cavity-preventing reactor, and polymerized at the temperature of 75°C for 24 hours with the reactor rotated at the speed of 3,000rpm to form a clad. Next, AIBN and 1-BuSH were added to 338g of MMA in the concentration of 0.066% and 0.2% by weight, respectively. The mixture thus prepared was charged into a jacket reactor, and polymerized at the temperature of 75°C for 40 minutes to prepare a prepolymer. To the prepolymer, 120g of BMA containing 0.066% by weight of AIBN and 0.2% by weight of 1-BuSH was added and then stirred for 2 minutes. The resulting mixture was charged into the cavity-preventing reactor, in which the clad had previously formed, to fill the reactor, and polymerized at the temperature of 75°C for 36 hours with the reactor rotated at the speed of 3,000rpm to fabricate a preform for a plastic optical fiber in a yield of 68%. The optical loss of 0.75mm thick plastic optical fiber drawn from the preform was measured to be 180dB/km.

## Comparative Example 3:

HMPP and 1-BuSH were added to 510g of MMA in the concentration of 0.066 and 0.2% by weight, respectively. The mixture thus prepared was charged into a main reaction part of a cavity-preventing reactor, and polymerized at the temperature of 30°C for 12 hours with the reactor rotated at the speed of 3,000rpm and irradiated with UV light to form a clad. Next, HMPP and 1-BuSH were added to 338g of MMA in the concentration of 0.066% and 0.2% by weight, respectively. The mixture thus prepared was polymerized at the temperature of 30°C for 40 minutes to prepare a prepolymer with UV light irradiation. To the prepolymer, 120g of BMA containing 0.066% by weight of HMPP and 0.2% by weight of 1-BuSH was added and then stirred for 2 minutes. The resulting mixture was charged into the cavity-preventing reactor in which the clad had previously formed, and polymerized at the temperature of 30°C for 12 hours with the reactor rotated at the speed of 3,000rpm and irradiated with UV light to fabricate a preform for a plastic optical fiber. Cracks occurred in one of 5 preforms fabricated in the same manner. The yield of the preform was 82%. The optical loss of 0.75mm thick plastic optical fiber drawn from the preform was measured to be 380dB/km.

## Example 3:

AIBN and 1-BuSH were added to 510g of MMA in the concentration of 0.066% and 0.2% by weight in MMA, respectively. The mixture thus prepared was charged into a main reaction part of a cavity-preventing reactor, and polymerized at the temperature of 75°C for 24 hours with the reactor rotated at the speed of 3,000rpm to form a clad. Next, AIBN and 1-BuSH were added to 338g of MMA in the concentration of 0.066%

and 0.2% by weight, respectively. The mixture thus prepared was charged into a jacket reactor, and polymerized at the temperature of 75°C for 40 minutes to prepare a prepolymer. Separately, 120g of BMA containing 0.022% by weight of HMPP and 0.2% by weight of 1-BuSH was irradiated with UV light to prepare another prepolymer. The two prepolymers were mixed and stirred for 5 minutes. The resulting mixture was charged into the cavity-preventing reactor, in which the clad had previously formed, to fill the reactor, and polymerized at the temperature of 75°C for 12 hours with the reactor rotated at the speed of 3,000rpm and irradiated with UV light to fabricate a preform for a plastic optical fiber in a yield of 96%. The optical loss of 0.75mm thick plastic optical fiber drawn from the preform was measured to be 205dB/km.

**Example 4:**

AIBN and 1-BuSH were added to 1,000g of MMA in the concentration of 0.066% and 0.2% by weight, respectively. The mixture thus prepared was charged into a jacket reactor, and polymerized at the temperature of 75°C for 2.5 hours with rapid stirring to prepare a prepolymer. The prepolymer thus prepared was cooled to 25°C and stored under nitrogen atmosphere containing no moisture. At this time, a small amount of the MMA monomer was added to the prepolymer so that the prepolymer had a viscosity of 1,000cps. 500g of the viscosity-controlled prepolymer was charged into a main reaction part of a cavity-preventing reactor and then polymerized at the temperature of 75°C for 12 hours with the reactor rotated at the speed of 1,000rpm to form a clad, and then the temperature was lowered to 45°C. Next, 120g of BMA containing 0.066% by weight of HMPP and 0.2% by weight of 1-BuSH was added to 320g of the prepolymer, and then stirred for 2 minutes. The resulting mixture was charged into the cavity-preventing reactor, in which the clad had previously formed, to fill the reactor, and polymerized at the temperature of 45°C for 12 hours with the reactor rotated at the speed of 3,000rpm and irradiated with UV light to fabricate a preform for a plastic optical fiber in a yield of 98%. The optical loss of 0.75mm thick plastic optical fiber drawn from the preform was measured to be 193dB/km.

In these Examples, the preforms fabricated by copolymerization of BMA and MMA were an amorphous random copolymer.

## Claims

1.　A method for fabricating a preform for a plastic optical fiber, the method comprising steps of filling a reactor with a reactant including a thermal polymerization initiator and, a photopolymerization initiator, and simultaneously or sequentially in either order carrying out a thermal polymerization and a photopolymerization with the reactor rotated.

2.　The method for fabricating a preform for a plastic optical fiber according to claim 1, wherein the reactor is a cavity-preventing reactor comprising an introduction part (10) having a reactant inlet (11) through which a reactant is fed into the whole reactor; a reaction part (20) which is adjacent to the introduction part (10) through a blocking wall (32) and has a flow path (21), through which the reaction part (20) is connected with the introduction part (10), at the center of the blocking wall (32); and one or more cavity-preventing structures (30) which exist between the flow path (21) of the reaction part (20) and the reactant inlet (11) of the introduction part, and has one or more flow paths (31) through which the reactant flows from the introduction part (10) to the reaction part (20), for preventing a cavity developed from the reactant inlet (11) of the introduction part from extending to the reaction part (20) during rotation of the reactor.

3.　The method for fabricating a preform for a plastic optical fiber according to claim 1 or 2, wherein the reactant comprises; a mixture selected from a mixture of a pair of monomers having different refractive indices, a mixture of a prepolymer polymerized from a monomer having a low refractive index and a monomer having a high refractive index, a mixture of a prepolymer polymerized from a monomer having a low refractive index and a prepolymer polymerized a monomer having a high refractive index, and a mixture prepared by dissolving a polymer having a low refractive index in a monomer having a high refractive index; a thermal polymerization initiator; a photopolymerization initiator; and a chain transfer agent.

4.　The method for fabricating a preform for a plastic optical fiber according to claim 3, wherein the monomer is selected from methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfuryl methacrylate, 1-phenylcyclohexylmethacrylate, pentachlorophenylmethacrylate, pentabromophenylmethacrylate, styrene, TFEMA (2,2,2-trifluoroethylmethacrylate), TFPMA (2,2,3,3-tetrafluoropropylmethacrylate), PFPMA (2,2,3,3,3-pentafluoropropylmethacrylate), HFIPMA (1,1,1,3,3,3-hexafluoroisopropylmethacrylate), HFBM (2,2,3,4,4,4-hexafluorobutylmethacrylate), HFBMA (2,2,3,3,4,4,4-heptafluorobutylmethacrylate) and PFOM (1H,1H-perfluoro-n-octylmethacrylate).

**5.** The method for fabricating a preform for a plastic optical fiber according to claim 3 or 4, wherein the thermal polymerization initiator is selected from 2,2'-azobis(isobutyronitrile), 1,1'-azobis(cyclohexane-carbonitrile), 2,2' -azobis(2,4-dimethylvaleronitrile), 2,2'-azobis(methylbutyronitrile), di-tert-butyl peroxide, lauroyl peroxide, benzoyl peroxide, tert-butyl peroxide, azo-tert-butane, azo-bis-isopropyl, azo-normal-butane and di-tert-butyl peroxide.

**6.** The method for fabricating a preform for a plastic optical fiber according to any of claims 3 to 5, wherein the photopolymerization initiator is selected from 4-(para-tolylthio)benzophenone, 4,4'-bis(dimethylamino)benzophenone, 2-methyl-4'-(methylthio)-2-morpholino-propiophenone, 1-hydroxy-cyclohexyl-phenyl-ketone, 2-hydroxy-2-methyl-1-phenyl-propan-1-one, benzophenone, 1-[4-(2-hydroxyethoxy)-phenyl]-2-hydroxy-2-methyl-1-propan-1-one, 2-benzyl-2-methylamino-1-(4-morpholinophenyl)-butanone-1, 2,2-dimethoxy-1,2-diphenylmethan-1-one, bis(2,4,6-trimethylbenzoyl)-phenylphospinoxide, 2-methyl-1[4-(methylthio)phenyl]-2-morpholinopropan-1-one and bis(.etha.5-2,4-cyclopentadien-1-yl)-bis(2, 6-difluoro-3-(1H-pyrro-1-yl)-phenyl) titanium.

**7.** The method for fabricating a preform for a plastic optical fiber according to any of claims 3 to 6, wherein the chain transfer agent is selected from normal-butyl-mercaptan, lauryl mercaptan, octyl mercaptan, dodecyl mercaptan, and 1-butanethiol.

**8.** The method for fabricating a preform for a plastic optical fiber according to any of claims 3 to 7, wherein the prepolymer has a viscosity of 50~500,000 cps (25°C).

**9.** The method for fabricating a preform for a plastic optical fiber according to any of claims 1 to 8, wherein the weight ratio of the thermal polymerization initiator to the photopolymerization initiator is within the range of 0.99: 0.01 to 0.01: 0.99.

**10.** The method for fabricating a preform for a plastic optical fiber according to any of claims 1 to 9, wherein the reactor is rotated in a constant or varied rotation speed.

**11.** The method for fabricating a preform for a plastic optical fiber according to claim 10, wherein the variable rotation of the reactor is carried out by a repeated high-speed and low-speed rotation or stopping, or a rotational velocity function having varying cycles, phases and amplitudes such as a trigonometric function.

**12.** The method for fabricating a preform for a plastic optical fiber according to any of claims 1 to 11, wherein the reactant is polymerized while the interior of the reactor is pressurized by an inert gas.

Fig. 1

FIG. 2

Fig. 3

Fig. 4A

Fig. 4B

Fig. 4C

**European Patent Office**

## EUROPEAN SEARCH REPORT

Application Number

EP 03 25 5330

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 015, no. 224 (P-1212), 7 June 1991 (1991-06-07) & JP 03 064706 A (MITSUBISHI RAYON CO LTD), 20 March 1991 (1991-03-20) * abstract * | 1 | B29D11/00 |
| A | PATENT ABSTRACTS OF JAPAN vol. 010, no. 124 (P-454), 9 May 1986 (1986-05-09) & JP 60 249111 A (MATSUSHITA DENKI SANGYO KK), 9 December 1985 (1985-12-09) * abstract * | 1 | |
| A | PATENT ABSTRACTS OF JAPAN vol. 1997, no. 07, 31 July 1997 (1997-07-31) & JP 09 085849 A (TOKUYAMA CORP), 31 March 1997 (1997-03-31) * abstract * | 1 | |
| A | PATENT ABSTRACTS OF JAPAN vol. 1999, no. 13, 30 November 1999 (1999-11-30) & JP 11 236420 A (TOKUYAMA CORP), 31 August 1999 (1999-08-31) * abstract * | 1 | TECHNICAL FIELDS SEARCHED (Int.Cl.7)<br><br>B29D<br>G02B |
| D,P, A | EP 1 277 555 A (SAMSUNG ELECTRONICS CO LTD) 22 January 2003 (2003-01-22) * the whole document * | 2 | |

The present search report has been drawn up for all claims

| Place of search | Date of completion of the search | Examiner |
|---|---|---|
| MUNICH | 12 December 2003 | Attalla, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 25 5330

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2003

| Patent document cited in search report | | Publication date | Patent family member(s) | | Publication date |
|---|---|---|---|---|---|
| JP 03064706 | A | 20-03-1991 | NONE | | |
| JP 60249111 | A | 09-12-1985 | NONE | | |
| JP 09085849 | A | 31-03-1997 | NONE | | |
| JP 11236420 | A | 31-08-1999 | NONE | | |
| EP 1277555 | A | 22-01-2003 | CN | 1397418 A | 19-02-2003 |
| | | | EP | 1277555 A1 | 22-01-2003 |
| | | | JP | 2003114342 A | 18-04-2003 |
| | | | KR | 2003012783 A | 12-02-2003 |
| | | | US | 2003030159 A1 | 13-02-2003 |